# EUROPÄISCHE PATENTSCHRIFT

(11) **EP 0 591 125 B1**
(45) Veröffentlichungstag und Bekanntmachung des Hinweises auf die Patenterteilung: **27.09.1995**
(21) Anmeldenummer: 93890173.3
(22) Anmeldetag: 06.09.1993
(51) Int. Cl.: B60C 11/24, B29D 30/06

(54) **Reifen**
Tyres
Bandage pneumatique

(30) Priorität: 24.09.1992 AT 1900/92
(43) Veröffentlichungstag der Anmeldung: 06.04.1994
(73) Patentinhaber: Semperit Reifen Aktiengesellschaft, A-2514 Traiskirchen (AT)
(72) Erfinder: Kuzmany, Dietrich, Dipl.-Ing., A-2512 Tribuswinkel (AT)
(74) Vertreter: Vinazzer, Edith

(56) Entgegenhaltungen:
- EP-A- 0 405 276
- DE-A- 3 818 355
- DE-A- 4 009 500

## Beschreibung

Die vorliegende Erfindung betrifft einen Reifen, hergestellt in einer radial geteilten Vulkanisierform mit einer Anzahl von das Laufstreifenprofil ausformenden Segmenten, wobei das Laufstreifenprofil eine definierte Struktur mit erhabenen Profilelementen, wie beispielsweise Blöcken, Rippen und dergleichen, sowie mit vertieften Profilelementen, wie beispielsweise Umfangsnuten und Querrillen, welch letztere insbesondere gegenüber der Umfangsrichtung geneigten Rillen bzw. Rillenabschnitte und/oder zumindest im wesentlichen in Profilquerrichtung verlaufende Rillen bzw. Rillenabschnitte sind.

Die Erfindung betrifft ferner eine radial geteilte Vulkanisierform sowie ein Verfahren zur Herstellung eines Reifens in einer radial geteilten Vulkanisationsform.

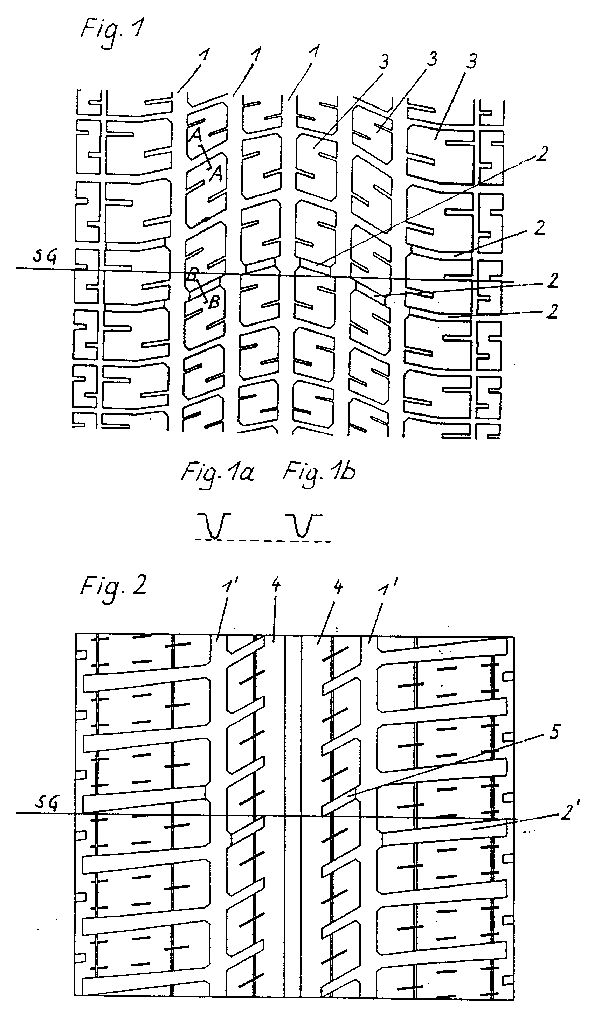

Es ist allgemein bekannt und üblich, Fahrzeugluftreifen in mehrteiligen Formen und insbesondere in solchen, bei denen das Profil des Laufstreifens durch eine Anzahl von radial bewegbaren Segmenten ausgeformt wird, zu vulkanisieren. Derartige Formen werden allgemein als radial geteilte Vulkanisierformen bezeichnet. Die Anzahl der das Profil formenden Segmente liegt üblicherweise zwischen 7 und 11. Jedes Segment formt mittels entsprechender Vorsprünge die am Profil auszubildenden Rillen, Nuten, Einschnitte und dergleichen, Vertiefungen in den Segmenten entsprechen am fertigen Reifen den erhabenen Profilelementen, wie Blöcke, Rippen und dergleichen. Während des Schließens der das Profil des Laufstreifens ausformenden Segmente drücken sich die genannten Vorsprünge bereits zu einem Zeitpunkt in den noch unvulkanisierten Laufstreifen des Rohreifens ein, wo die Schließstellung noch nicht erreicht ist. Dadurch wird dann bis zum Erreichen der Schließstellung der noch fließfähige Kautschuk im Laufstreifen teilweise zu den Stößen der Segmente hingedrückt, was am fertigen Reifen dort örtliche Verdickungen bewirkt, die die Reifengleichförmigkeit stören. Dieses Problem wird beispielsweise im Stand der Technik gemäß der EP-A 0 405 276 (dem Oberbegriff des Anspruchs 1 entsprechend) ausführlich erörtert und es wird dazu insbesondere auf die in dieser Druckschrift enthaltenen Figuren 1 bis 3 und die zugehörige Beschreibung verwiesen. Zur Lösung dieses Problems wird in der genannten EP-A vorgeschlagen, ein größeres Positivvolumen an den Segmentstößen vorzusehen, um das überschüssige Laufstreifenmaterial in für den Rundlauf unschädlicher Weise im Reifen unterzubringen. Insbesondere wird das vergrößerte Volumen dadurch geschaffen, daß am bzw. im Bereich der Segmentstöße die gesetzlich vorgeschriebenen Verschleißanzeiger, die grundsätzlich in den Umfangsrillen anzubringen sind und die üblicherweise die englische Bezeichnung Treadwear-Indikatoren tragen, angebracht werden.

Für einen PKW-Reifen ist es erforderlich, an sechs unterschiedlichen Stellen des Reifenumfanges Treadwear-Indikatoren anzubringen. Aus optischen Gründen ist es nun nicht vorteilhaft, etwa bei den in letzter Zeit weit verbreiteten Vulkanisierformen mit neun das Profil ausformenden Segmenten, an jedem Segmentstoß Treadwear-Indikatoren vorzusehen. Es ist ferner günstig, die Treadwear-Indikatoren dort am Profil vorzusehen, wo ein Profilabschnitt (Pitch) mit einer relativ großen Umfangserstreckung und somit einer relativ größeren Stabilität vorliegt. Darauf kann jedoch bei Anordnung der Treadwear-Indikatoren im Bereich der Segmentstöße nicht Rücksicht genommen werden.

Hier setzt nun die Erfindung ein, deren Aufgabe darin besteht, einen Reifen der eingangs genannten Art so zu gestalten, daß er ein Ausgleichsvolumen für den beim Formschließen zu den Segmentstößen hingedrückten Kautschuk innerhalb der Reifen- bzw. Profilkontur hat, wobei jedoch die Treadwear-Indikatoren an beliebiger Stelle am Reifenumfang angeordnet werden sein können.

Gelöst wird die gestellte Aufgabe erfindungsgemäß dadurch, daß zumindest ein Teil der den Segmentstößen unmittelbar benachbarten oder der gegebenenfalls diese Segmentstöße querenden Querrillen ein Volumen aufweist, welches kleiner ist als das Volumen dieser Querrillen gemäß der definierten Profilstruktur.

Die Erfindung besteht daher in einer sehr einfachen und kostengünstigen Maßnahme, das im Bereich der Segmentstöße sich bildende höhere Kautschukvolumen am Reifen selbst unterzubringen, wobei die Anordnung der Treadwear-Indikatoren an beliebigen Stellen des Reifenumfanges erfolgen kann. Dabei handelt es sich insbesondere auch um eine Lösung, die das optische Erscheinungsbild des Reifens nicht beeinträchtigt.

Dabei ist es von Vorteil, wenn zumindest im Neuzustand des Reifens die das kleinere Volumen aufweisenden Querrillen eine Breite und einen Verlauf aufweisen, der ihrer Breite bzw. ihrem Verlauf in der definierten Profilstruktur entsprechen. Damit bleibt bei diesen Querrillen vorteilhafterweise die definierte Profilstruktur weitgehend erhalten.

Es ist ferner günstig, wenn diejenigen Querrillen das verringerte Rillenvolumen aufweisen, die den Segmentstößen jeweils am nächsten liegen.

Es kann jedoch auch eine Ausgestaltung gewählt werden, bei der die beidseitig der Segmentstöße benachbarten Querrillen das verringerte Rillenvolumen aufweisen.

Nach einer besonders bevorzugten und vorteilhaften Ausführungsform der Erfindung wird das verringerte Rillenvolumen der Querrillen dadurch gebildet, daß diese Querrillen entweder über zumindest im wesentlichen ihre gesamte Länge oder örtlich an einer oder mehreren Stellen mit einer verringerten Rillentiefe versehen sind. Dabei ist diese verringerte Rillentiefe insbesondere 1 bis 2 mm geringer als die definierte Querrillentiefe.

Bei einer weiteren Ausführungssform der Erfindung ist vorgesehen, daß das verringerte Rillenvolumen der Querrillen dadurch gebildet wird, daß von den Querrillenwänden stegartige Teile, örtliche Verdickungen und dergleichen abragen.

Zur Herstellung der Fahrzeugreifen wird eine radial geteilte Vulkanisierform mit einer Anzahl von das Laufstreifenprofil ausformenden Segmenten mit einer definierten Struktur, die mit Vorsprüngen, wie beispielsweise mit Längsstegen zur Ausformung von Umfangsnuten und Querstegen zur Ausformung von Querrillen, geneigten Rillen und Querrillenabschnitten versehen ist, verwendet, wobei bei einer nach der Erfindung ausgestalteten Form zumindest ein Teil der den Segmentstoßflächen unmittelbar benachbarten Querstege ein kleineres Stegvolumen bzw. Materialvolumen aufweisen, als die für diese Stelle definierten Querstege.

Dabei können insbesondere die Querstege mit dem verringerten Volumen zumindest im wesentlichen über ihre gesamte Erstreckung eine geringere Quersteghöhe aufweisen. Nach einer weiteren Variante der Erfindung sind die Querstege, die ein verringertes Volumen besitzen, mit einer oder mehreren Ausnehmungen versehen. Bei einer weiteren Variante sind die Querstege, die ein verringertes Volumen besitzen, mit einer Anzahl von durchgehenden Löchern, mit Einbuchtungen oder dergleichen versehen.

Das Verfahren zur Herstellung eines Reifens in einer radial geteilten Vulkanisierform mit einer Anzahl von das Laufstreifenprofil ausformenden Segmenten, wobei das Profil eine definierte Struktur mit erhabenen Profilelementen, wie beispielsweise Blöcken, Rippen und dergleichen, sowie mit vertieften Profilelementen, wie beispielsweise Umfangsnuten und Querrillen, welch letztere insbesondere gegenüber der Umfangsrichtung geneigte Rillen bzw. Rillenabschnitte und/oder zumindest im wesentlichen in Profilquerrichtung verlaufenden Rillen bzw. Rillenabschnitte sind, ist dadurch gekennzeichnet, daß zumindest ein Teil der den Segmentstößen unmittelbar benachbarten oder der gegebenenfalls diese querenden Querrillen ein Volumen besitzen, welches kleiner ist als das Querrillenvolumen gemäß der definierten Profilstruktur.

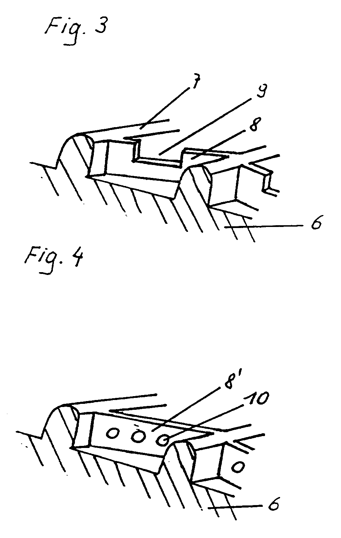

Weitere Merkmale, Vorteile und Einzelheiten der Erfindung werden nun anhand der Zeichnung, die mehrere Ausführungsbeispiele darstellt, näher beschrieben. Dabei zeigen Fig. 1 und Fig. 2 Draufsichten auf Teilabwicklungen von Laufflächenprofilen von nach der Erfindung gestalteten Reifen, Fig. 1a zeigt einen Schnitt entlang der Linie A-A, Fig. 1b einen Schnitt entlang der Linie B-B der Fig. 1. Die Figuren 3 und 4 zeigen jeweils schematisch Schrägansichten von Reifenformteilen, die zur Ausformung des Laufflächenprofiles bestimmt sind, und zwar jeweils einen an die Formsegmentstoßfläche anschließenden Teil.

Fig. 1 zeigt eine erste Ausführungsform der Erfindung anhand der Draufsicht auf eine Teilabwicklung einer Variante eines Laufflächenprofiles. Dieses Profil besteht im wesentlichen aus einer Anzahl von Umfangsnuten 1 und diese in bzw. etwa in Querrichtung schneidenden Querrillen 2, wobei durch diese Nuten 1 und Rillen 2 Blöcke 3 gebildet werden, die sich in einer Anzahl von in Umfangsrichtung verlaufenden Blockreihen erstrecken. Das Profil besitzt eine bezüglich aller Abmessungen, wie Dessintiefe, Nut- und Querrillenbreite, und dergleichen definierte Profilstruktur. Mit der Linie SG ist eine der Segmentstöße (Stoßstelle zweier benachbarter Formsegmente) veranschaulicht.

Bei diesem Ausführungsbeispiel verläuft der Segmentstoß derart, daß die Blöcke in den Schulterblockreihen zu etwa 1/3 von dem einen Formsegment und zu etwa 2/3 vom angrenzenden Formsegment ausgeformt werden, in den Blöcken der weiteren Blockreihen ist dieses Verhältnis wesentlich größer. Nach der Erfindung sind nun zumindest jene Querrillen 2, die dem Segmentstoß SG am nächsten liegen im wesentlichen über ihre gesamte Länge mit einer geringeren Rillentiefe versehen, als die diesen in Umfangsrichtung und vom selben Formsegment ausgeformten Querrillen 2. Die durch den Segmentstoß SG erfaßten Blöcke in den beiden Schulterblockreihen sind beidseitig des Segmentstoßes SG durch Querrillen 2 begrenzt, die eine geringere Rillentiefe, wie beschrieben, aufweisen. Fig. 1a und Fig. 1b zeigen im Vergleich Querschnitte durch je eine Querrille 2 (Fig. 1a) mit normaler Dessintiefe und einer Querrille 2 (Fig. 1b) mit geringfügig geringerer Rillentiefe. Das Ausmaß, um welches der Rillengrund der dem Segmentstoß SG benachbarten Querrillen 2 angehoben wird ist insbesondere von der Profilgestaltung und unter anderem auch davon abhängig, aus wieviel Segmenten sich die Reifenform zusammensetzt und wird im allgemeinen im Bereich zwischen 1 und 2 mm betragen.

Es ist selbstverständlich auch möglich, sämtliche beidseitig des Segmentstoßes SG unmittelbar angrenzenden Querrillen 2 mit einer verringerten Rillentiefe zu versehen. Je nach dem, wo bezogen auf das Profilmuster der Segmentstoß SG verläuft, ist es weiters auch möglich, Querrillen 2 mit verringerter Rillentiefe abwechselnd in dem einen und dem anderen Formsegment auszuformen. Wie schon erwähnt ist es dabei besonders günstig, jene Querrillen oder Querrillenabschnitte zu wählen, die am nächsten zum Segmentstoß SG liegen.

In Fig. 2 ist eine weitere Profilvariante schematisch dargestellt, die Profilrippen 4 mit sacknutartig endenden geneigten Querrillenabschnitten 5, seitlich anschließend wiederum je 2 breite Umfangsnuten 1' und schulterseitig je 1 Blockreihe, deren Blöcke jeweils durch Querrillen 2' voneinander getrennt sind, aufweist. Der Segmentstoß ist wiederum durch eine mit SG bezeichnete Linie angedeutet. Auch bei dieser Variante sind die dem Segmentstoß SG am nächsten liegenden Querrillen 2' und Querrillenabschnitte 5 mit einer verringerten Rillentiefe versehen.

Im allgemeinen wird darauf geachtet, daß keine Durchtrennung bzw. Aufteilung von Querrillen auf zwei benachbarte Formsegmente erfolgt. Eine solche Aufteilung kann jedoch bei manchen Profilausgestaltungen erwünscht oder auch unumgänglich sein. Dabei kann selbstverständlich der solchermaßen betroffene Querrillenbereich zur Gänze oder teilweise mit einer verringerten Rillentiefe versehen werden.

Weitere Ausführungsvarianten der Erfindung werden nun anhand der Figuren 3 und 4, die jeweils einen Teil eines Formsegmentes zum Ausformen eines Profilabschnittes des Laufstreifens zeigen, beschrieben. Da es ohne weiteres ersichtlich ist, wie die entstehenden Querrillen gestaltet sind, wird auf eine gesonderte Darstellung anhand weiterer Ansichten von Profilvarianten verzichtet.

In Fig. 3 sind dabei eine Stoßfläche 6 eines Formsegmentes erkennbar, sowie Längsstege 7, die beispielsweise Umfangsnuten formen und Querstege 8, die zum Ausformen von Querrillen bestimmt sind. Dabei sind die der Stoßfläche 6 benachbarten Querstege 8 etwa mittig mit einer Ausnehmung 9 versehen, so daß dort beim Schließen der Form und Zusammenfügen der einzelnen Formsegmente das überschüssige Kautschukmaterial Platz finden kann. Anstelle dieser dargestellten einzigen Ausnehmung 9 können auch mehrere Ausnehmungen vorgesehen werden. Diese Ausnehmungen 9 ergeben am fertigen Reifen örtliche Grundanhebungen in den Querrillen.

Fig. 4 zeigt eine Ausführungsvariante, wo die der Stoßfläche 6 benachbarten Querstege 8' mit durchgehenden, beispielsweise mit kreisförmigem Querschnitt versehenen, Löchern 10 versehen sind. Bervorzugt werden dabei diese Löcher 10 über die Quersteglänge gleichmäßig verteilt, ihre Anzahl obliegt dem Ermessen des Fachmannes. Anstelle durchgehender Löcher können an einer Seite oder an beiden Seiten der Querstege entsprechende Einbuchtungen vorgesehen werden. Im Falle von durchgehenden Löchern wird beim Entformen des fertig vulkanisierten Reifens das Gummimaterial dort durchgerissen, was jedoch keinerlei Auswirkung auf die Eigenschaften des entstehenden Reifens hat.

Es wird abschließend noch darauf verwiesen, daß die einzelnen geschilderten und dargestellten Maßnahmen bei ein und demselben Reifen kombiniert werden können.

## Patentansprüche

1. Reifen, hergestellt in einer radial geteilten Vulkanisierform mit einer Anzahl von das Laufstreifenprofil ausformenden Segmenten, wobei das Laufstreifenprofil eine definierte Struktur mit erhabenen Profilelementen, wie beispielsweise Blöcken, Rippen und dergleichen, sowie mit vertieften Profilelementen, wie beispielsweise Umfangsnuten und Querrillen, welch letztere insbesondere gegenüber der Umfangsrichtung geneigten Rillen bzw. Rillenabschnitte und/oder zumindest im wesentlichen in Profilquerrichtung verlaufende Rillen bzw. Rillenabschnitte sind, dadurch gekennzeichnet, daß zumindest ein Teil der den Segmentstößen (SG) unmittelbar benachbarten oder der gegebenenfalls diese Segmentstöße (SG) querenden Querrillen (2, 2', 5) ein Volumen aufweist, welches kleiner ist als das Volumen dieser Querrillen gemäß der definierten Profilstruktur.

2. Reifen nach Anspruch 1, dadurch gekennzeichnet, daß zumindest im Neuzustand des Reifens die das kleinere Volumen aufweisenden Querrillen (2, 2', 5) eine Breite und einen Verlauf aufweisen, der ihrer Breite bzw. ihrem Verlauf in der definierten Profilstruktur entspricht.

3. Reifen nach Anspruch 1 oder 2, dadurch gekennzeichnet, daß diejenigen Querrillen (2, 2', 5) das verringerte Rillenvolumen aufweisen, die den Segmentstößen jeweils am nächsten liegen.

4. Reifen nach Anspruch 1 oder 2, dadurch gekennzeichnet, daß die beidseitig den Segmentstößen benachbarten Querrillen das verringerte Rillenvolumen aufweisen.

5. Reifen nach einem der Ansprüche 1 bis 4, dadurch gekennzeichnet, daß das verringerte Rillenvolumen der Querrillen (2, 2', 5) dadurch gebildet ist, daß diese Querrillen (2, 2', 5) entweder über zumindest im wesentlichen ihre gesamte Länge oder örtlich an einer oder mehreren Stellen mit einer verringerten Rillentiefe versehen sind.

6. Reifen nach einem der Ansprüche 1 bis 4, dadurch gekennzeichnet, daß das verringerte Rillenvolumen der Querrillen dadurch gebildet ist, daß von den Querrillenwänden stegartige Teile, örtliche Verdickungen und dergleichen abragen.

7. Radial geteilte Vulkanisierform mit einer Anzahl von das Laufstreifenprofil ausformenden Segmenten, mit einer definierten Struktur, die mit Vorsprüngen, wie beispielsweise mit Längsstegen zur Ausformung von Umfangsnuten und Querstegen zur Ausformung von Querrillen, geneigten Rillen und Querrillenabschnitten versehen ist, dadurch gekennzeichnet, daß zumindest ein Teil der den Segmentstoßflächen unmittelbar benachbart angeordneten Querstege (8, 8') ein kleineres Stegvolumen bzw. Materialvolumen aufweist, als die für diese Stelle definierten Querstege.

8. Vulkanisierform nach Anspruch 7, dadurch gekennzeichnet, daß die Querstege mit dem verringerten Volumen zumindest im wesentlichen über ihre gesamte Erstreckung eine geringere Quersteghöhe aufweisen.

9. Vulkanisierform nach Anspruch 7, dadurch gekennzeichnet, daß die Querstege (8), die ein verringertes Volumen besitzen, mit einer oder mehreren Ausnehmungen (9) versehen sind.

10. Vulkanisierform nach Anspruch 7, dadurch gekennzeichnet, daß die Querstege (8'), die ein verringertes Volumen besitzen, mit einer Anzahl von durchgehenden Löchern (10), mit Einbuchtungen oder dergleichen versehen sind.

11. Verfahren zur Herstellung eines Reifens in einer radial geteilten Vulkanisierform mit einer Anzahl von das Laufstreifenprofil ausformenden Segmenten, wobei das Profil eine definierte Struktur mit erhabenen Profilelementen, wie beispielsweise Blöcken, Rippen und dergleichen, sowie mit vertieften Profilelementen, wie beispielsweise Umfangsnuten und Querrillen, welch letztere insbesondere gegenüber der Umfangsrichtung geneigte Rillen bzw. Rillenabschnitte und/oder zumindest im wesentlichen in Profilquerrichtung verlaufenden Rillen bzw. Rillenabschnitte sind, dadurch gekennzeichnet, daß zumindest ein Teil der den Segmentstößen unmittelbar benachbarten oder der gegebenenfalls diese querenden Querrillen (2, 2', 5) ein Volumen besitzen, welches kleiner ist als das Querrillenvolumen gemäß der definierten Profilstruktur.

## Claims

1. Tyre, produced in a radially divided vulcanising mould having a number of segments which form the tread strip profile, the tread strip profile being a specific structure provided with raised profile elements, such as, for example, blocks, ribs and the like, as well as provided with recessed profile elements, such as circumferential grooves and transverse notches, for example, the latter more especially being notches or notch portions which are inclined relative to the circumferential direction and/or notches or notch portions which extend at least substantially in the transverse direction of the profile, characterised in that at least some of the transverse notches (2, 2', 5), which lie directly adjacent the segment abutments (SG) or possibly cross these segment abutments (SG), have a volume which is smaller than the volume of these transverse notches according to the specific profile structure.

2. Tyre according to claim 1, characterised in that, at least in the new state of the tyre, the transverse notches (2, 2', 5) having the smaller volume have a width and a configuration which correspond to their width and their configuration in the specific profile structure.

3. Tyre according to claim 1 or 2, characterised in that those transverse notches (2, 2', 5) lying closest to the segment abutments have the reduced notch volume.

4. Tyre according to claim 1 or 2, characterised in that the transverse notches, which lie adjacent the segment abutments on both sides, have the reduced notch volume.

5. Tyre according to one of claims 1 to 4, characterised in that the reduced notch volume of the transverse notches (2, 2', 5) is formed when these transverse notches (2, 2', 5) are provided with a reduced notch depth either over at least substantially their entire length or locally at one or more locations.

6. Tyre according to one of claims 1 to 4, characterised in that the reduced notch volume of the transverse notches is formed when web-like portions, local thickened portions and the like protrude from the walls of the transverse notches.

7. Radially divided vulcanising mould having a number of segments which form the tread strip profile, having a specific structure which is provided with projection members, such as, for example, longitudinal webs for the formation of circumferential grooves and transverse webs for the formation of transverse notches, inclined notches and transverse notch portions, characterised in that at least some of the transverse webs (8, 8'), which are disposed directly adjacent the segment abutment faces, have a smaller web volume or material volume than the transverse webs specific to this location.

8. Vulcanising mould according to claim 7, characterised in that the transverse webs with the reduced volume have a smaller transverse web height at least substantially over their entire extension.

9. Vulcanising mould according to claim 7, characterised in that the transverse webs (8), which have a reduced volume, are provided with one or more recesses (9).

10. Vulcanising mould according to claim 7, characterised in that the transverse webs (8'), which have a reduced volume, are provided with a number of through-holes (10), with indentations or the like.

11. Method of producing a tyre in a radially divided vulcanising mould having a number of segments which form the tread strip profile, the profile being a specific structure provided with raised profile elements, such as, for example, blocks, ribs and the like, as well as provided with recessed profile elements, such as circumferential grooves and transverse notches, for example, the latter more especially being notches or notch portions which are inclined relative to the circumferential direction and/or notches or notch portions which extend at least substantially in the transverse direction of the profile, characterised in that at least some of the transverse notches (2, 2', 5), which lie directly adjacent the segment abutments or possibly cross said abutments, have a volume which is smaller than the transverse notch volume according to the specific profile structure.

## Revendications

1. Bandage pneumatique réalisé dans un moule de vulcanisation subdivisé en direction radiale, comprenant un certain nombre de segments formant le profil des bandes de roulement, le profil des bandes de roulement étant une structure définie comprenant des éléments de profil en relief tels que des blocs, des nervures et analogues, ainsi que des éléments de profil en creux tels que des gorges périphériques et des rainures transversales, ces dernières étant en particulier des rainures ou des sections de rainure inclinées par rapport à la direction périphérique et/ou au moins des rainures ou des sections de rainure orientées sensiblement en direction transversale du profil, caractérisé en ce qu'au moins une partie des nervures transversales (2, 2', 5) qui sont immédiatement voisines des bords des segments (SG) ou qui traversent éventuellement ces bords (SG) ont un volume qui est plus petit que le volume de ces nervures transversales conformes à la structure de profil définie.

2. Bandage pneumatique selon la revendication 1, caractérisé en ce qu'au moins à l'état neuf du bandage pneumatique, les rainures transversales (2, 2', 5) dont le volume est le plus petit présentent une largeur et une forme qui correspondent à leur largeur ou à leur forme dans la structure de profil définie.

3. Bandage pneumatique selon la revendication 1 ou 2, caractérisé en ce que les rainures transversales (2, 2', 5) qui sont respectivement les plus proches des bords des segments présentent le volume réduit.

4. Bandage pneumatique selon la revendication 1 ou 2, caractérisé en ce que les nervures transversales qui sont voisines de chaque côté des bords des segments présentent le volume réduit.

5. Bandage pneumatique selon l'une quelconque des revendications 1 à 4, caractérisé en ce que le volume réduit des rainures transversales (2, 2', 5) est constitué de manière que ces rainures (2, 2', 5) présentent une profondeur réduite soit sur au moins sensiblement leur longueur d'ensemble soit localement en un ou plusieurs emplacements.

6. Bandage pneumatique selon l'une quelconque des revendications 1 à 4, caractérisé en ce que le volume réduit des rainures transversales est constitué de manière que des parties en forme de branche, des épaississements locaux et analogues fassent saillie des parois des nervures transversales.

7. Moule de vulcanisation subdivisé en direction radiale, comprenant un certain nombre de segments formant le profil des bandes de roulement, présentant une structure définie qui est munie de saillies telles que des branches longitudinales pour former des gorges périphériques et des branches transversales pour former des rainures transversales, des rainures inclinées et des sections de rainure transversales, caractérisé en ce qu'au moins une partie des branches transversales (8, 8') qui sont immédiatement voisines des surfaces des bords des segments ont un volume de branche ou un volume de matériau plus petit que celui des branches transversales définies pour ces emplacements.

8. Moule de vulcanisation selon la revendication 7, caractérisé en ce que les branches transversales de volume réduit présentent au moins sensiblement sur la totalité de leur étendue une hauteur de branche plus faible.

9. Moule de vulcanisation selon la revendication 7, caractérisé en ce que les branches transversales (8) dont le volume est réduit sont munies d'un ou plusieurs évidements (9).

10. Moule de vulcanisation selon la revendication 7, caractérisé en ce que les branches transversales (8') de volume réduit sont munies d'un certain nombre de trous traversants (10), de parties enfoncées ou analogues.

11. Procédé pour réaliser un bandage pneumatique dans un moule de vulcanisation subdivisé radialement et comprenant un certain nombre de segments formant le profil des bandes de roulement, le profil étant une structure définie avec des éléments de profil en relief, tels que des blocs, des nervures et analogues, ainsi qu'avec des éléments de profil en creux tels que des gorges périphériques et des rainures transversales, ces dernières étant en particulier des rainures ou des sections de rainure inclinées par rapport à la direction périphérique et/ou au moins essentiellement des rainures ou des sections de rainure orientées sensiblement en direction transversale du profil, caractérisé en ce qu'au moins une partie des rainures transversales (2, 2', 5) qui sont immédiatement voisines des bords des segments ou croisent éventuellement ces derniers ont un volume qui est plus petit que le volume des nervures transversales conformes à la structure de profil définie.
